# EUROPÄISCHE PATENTSCHRIFT

(11) **EP 0 850 100 B1**
(45) Veröffentlichungstag und Bekanntmachung des Hinweises auf die Patenterteilung: **03.11.1999**
(21) Anmeldenummer: 96929197.0
(22) Anmeldetag: 02.08.1996
(51) Int. Cl.: B01D 45/16, B01D 45/08, F24C 15/20

(54) **VORRICHTUNG ZUM ABSCHEIDEN VON DUNST-, FETT- UND/ODER STAUBPARTIKELN AUS EINEM LUFTSTROM**
DEVICE FOR SEPARATING FUMES, OIL DROPLETS AND/OR DUST FROM A STREAM OF AIR
DISPOSITIF PERMETTANT D'EXTRAIRE DES PARTICULES DE FUMEES, DE GRAISSES ET/OU DE POUSSIERES CONTENUES DANS UN FLUX D'AIR

(30) Priorität: 04.08.1995 CH 225695
(43) Veröffentlichungstag der Anmeldung: 01.07.1998
(73) Patentinhaber: CEDIS LICENSING GMBH, 5020 Salzburg (AT); INTERLICENSE DEN HAAG B.V., NL-2596 HG Den Haag (NL)
(72) Erfinder: ROSENICH, Paul, FL-9495 Triesen (LI)
(74) Vertreter: Rosenich, Paul, Dipl.-Ing.
(86) Internationale Anmeldenummer: EP9603400
(87) Internationale Veröffentlichungsnummer: WO9705941

(56) Entgegenhaltungen:
- WO-A-80/02114
- FR-A- 2 399 268
- FR-A- 2 554 737
- FR-A- 2 575 667
- US-A- 4 784 114

## Beschreibung

Die Erfindung betrifft eine Vorrichtung zum Abscheiden von Dunst-, Fett- und/oder Staubpartikeln aus einem Luftstrom, mit einem an ein Sauggebläse angeschlossenen Gehäuse, in welches der Luftstrom von der Gehäuseunterseite her über einen langgestreckten Einlass angesaugt wird, der von nach oben konvergierenden Leitprofilen begrenzt ist, einer im wesentlichen dachförmigen Abdeckung für den Einlass und zu beiden Seiten des Einlasses an diesen anschliessenden Rinnenprofilen, wobei die Abdeckung die Rinnenprofile übergreift, in welchen zumindest zwei im wesentlichen parallel zum Einlass verlaufende Umlenk- und Abscheideelemente eine im wesentlichen mäanderförmige Luftströmung zwischen der Bodenrinne und dem oberen Abscheideelement erzwingen, welche mit der äusseren Profilseitenwand einen Luftaustrittsspalt begrenzt.

Bei einer bekannten Dunstabsaugvorrichtung dieser Art sind als Umlenk- und Abscheideelemente in den Rinnenprofilen mit gegenseitigem Abstand gewölbte, mit hakenformigen Längsrippen versehene Prallwände angeordnet, die sich vom Profilboden und von der Profildecke weg erstrecken. Diese Konstruktion ist in herstellungstechnischer Hinsicht wegen der Formgebung und Anordnung der Prallwände relativ aufwendig. Ausserdem verlangsamt sich die Luftströmung über das Rinnenprofil auch bei stufenweiser Engerstellung der Prallwände, wodurch die Abscheidewirkung abnimmt. Schliesslich ist die bekannte Ausführung schwer zu reinigen, weil nur die Rinnenprofile mit Flüssigkeit gespült werden; an den Prallwänden im Profildeckenbereich können sich dagegen Ablagerungen bilden, die zu einem Verlegen und Zuwachsen des Abscheidebereiches führen können.

Bei anderen bekannten Dunstabsaugvorrichtungen wird die Abluft über eine Abscheidekammer geleitet, in der Abscheideflächen aufweisende, rinnenförmige Prallelemente einen Strömungsweg mit mehrfacher Umlenkung begrenzen. Diese in verschiedensten Ausführungen bekannten Vorrichtungen haben ebenfalls den Nachteil, dass die Abscheidekammer nur mit Mühe von den abgeschiedenen Teilchen gereinigt werden kann, weil mit der dazu vorgesehenen Spülflüssigkeit nur der Boden der Rinnen gereinigt wird. Beispielsweise besteht der Nachteil der aus der AT-A-356.848 bekannten Dunstabsaugvorrichtung darin, dass eine Verschmutzung von oberhalb der Spülflüssigkeitszuführfläche vorgesehenen Umlenkprofilen nicht verhindert werden kann, was mit der Zeit zwangsläufig zu einer Verringerung der Durchtrittsquerschnitte für die Luftströmung führt.

Bei einer aus der US-A-3.616.744 bekannten Abscheidevorrichtung wird Wassernebel angewendet, um die im Luftstrom mitgeführten Partikel niederzuschlagen. Abgesehen davon, dass bei dieser bekannten Ausführung nur ein geringer Abscheidegrad ermöglicht wird, wird die Abluft durch den über Sprühdüsen verteilten Wassernebel stark befeuchtet, wodurch es zur Kondensatbildung im Kanalnetz und in der Ventilatorkammer kommen kann.

Bei einer aus der AT-A-334.041 bekannten Abscheidevorrichtung ist in kreuzbogenförmig gewölbten Deckenelementen jeweils im Scheitelbereich eine Sprühdüse vorgesehen. Eine ständige Zufuhr von Sprühflüssigkeit bewirkt einen dünnen Flüssigkeitsmantel über die Deckenfläche, um Schmutzteilchen zu binden und abzuführen. In der praktischen Anwendung dieser Vorrichtung zeigt sich jedoch, dass sowohl bei Inbetriebnahme als auch bei Abschalten der Sprühflüssigkeit die Strömung abreisst und erhebliche Spülflüssigkeitsmengen abtropfen.

US-A-4784114 und FR-A-2399268 zeigen weitere Ausführungen von Dunstabsaugvorrichtungen.

Der Erfindung liegt die Aufgabe zugrunde, die vorstehend geschilderten Mängel der bekannten Ausführungen zu vermeiden und die Abscheidevorrichtung so auszubilden, dass sie in konstruktiver Hinsicht einfach ist und kostengünstig hergestellt werden kann; die Vorrichtung soll ferner einen hohen Wirkungsgrad bieten und im Falle des Einsatzes von Spülflüssigkeit selbstreinigend sein.

Die erfindungsgemässe Vorrichtung ist im Anspruch 1 definiert und weist Umlenk- und Abscheideelemente auf, die zueinander annähernd parallel verlaufen und spiralförmig gekrümmt sind. Bevorzugt ist wenigstens ein Teil der Elemente an einem ebenso spiralig gekrümmten Rinnenprofilboden befestigt.

Diese Konstruktion gewährleistet einen hohen Abscheidegrad, weil durch die spiralförmige Ausbildung der Abscheide- und Umlenkelemente - und noch verstärkt auch bei spiraliger Ausbildung des Rinnenprofils - die Luftströmung beschleunigt wird und nach mehrmaligen Richtungsänderungen sich die festen und flüssigen Partikeln an den Umlenkprofilen ausscheiden. Durch die gewölbte Ausbildung des gesamten luftführenden Abscheidebereiches wird eine hohe Formsteifigkeit erzielt und eine Resonanzbildung mit einer damit verbundenen erhöhten Geräuschentwicklung verhindert. Im Bereich des Austrittskanales wird die Strömungsgeschwindigkeit der Abluft reduziert, so dass durch den Verzögerungseffekt ein partieller Unterdruck der Wrasen entsteht und die noch vorhandenen Wasserdampfteilchen in die Abscheiderinne zurückfallen.

Nach einem weiteren Merkmal der Erfindung ist das Abdeckprofil gewölbt und vorzugsweise einstückig mit auf jeder Seite zwei oder mehreren spiralförmig gerundeten Abscheideprofilen verbunden. Im Scheitelbereich des Abdeckprofils ist vorzugsweise ein Zuführrohr für Spülflüssigkeit vorgesehen, das sich über die Profillänge erstreckt. Durch diese Massnahme wird eine periodisch wirksame Reinigung des Abdeckprofils möglich.

Weitere Merkmale der Erfindung und Varianten bzw. Ausbildungen dazu sind in den abhängigen Ansprüchen angegeben. Diese und weitere Merkmale werden nachfolgend an einem Ausführungsbeispiel unter Bezugnahme auf die Zeichnung näher erläutert. Es zeigen:

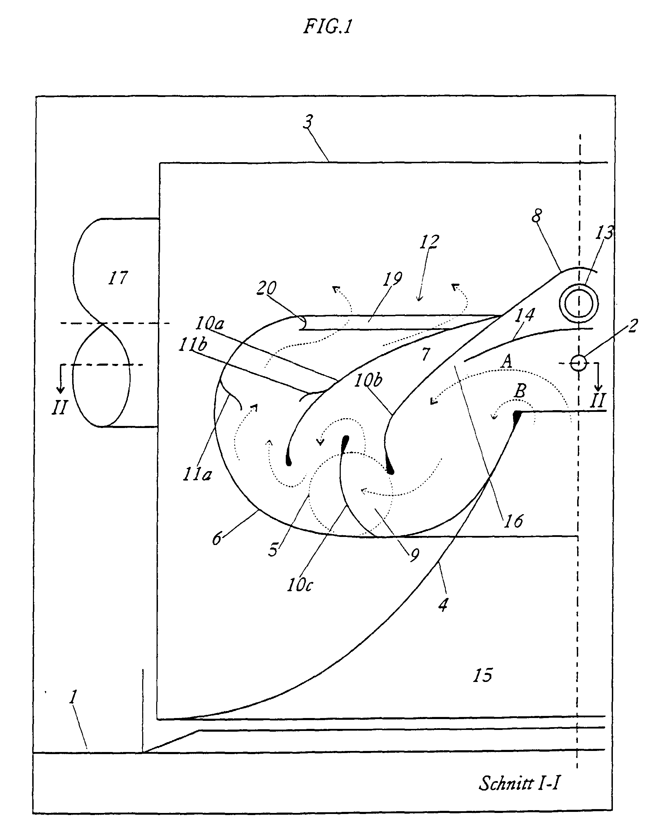

- Fig.1: einen schematischen Querschnitt einer erfindungsgemässen Abscheidevorrichtung;

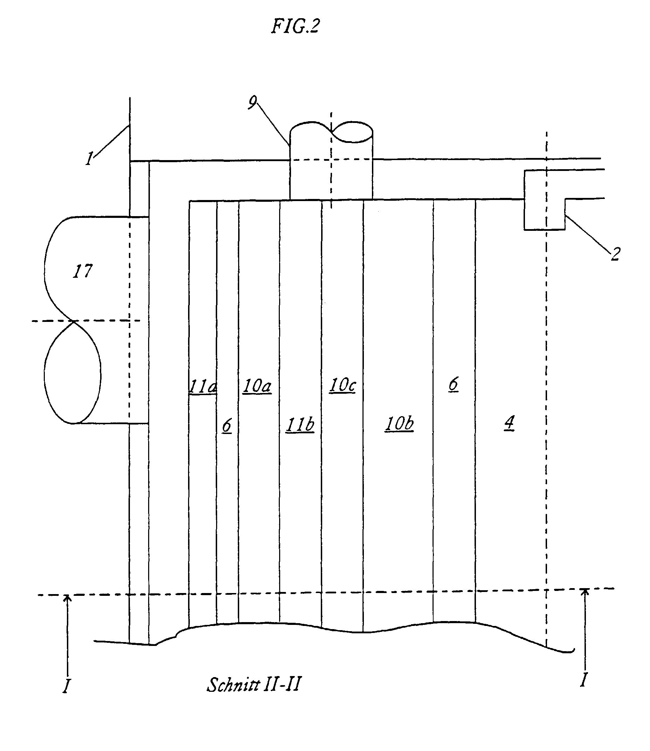

- Fig.2: einen Schnitt nach der Linie II-II in Fig.1.

Die Abscheidevorrichtung ist z.B. für eine Küche bestimmt. Sie weist ein Gehäuse 3 auf, das beispielsweise in einer ebenen Hängedecke 1 eingebaut ist, wobei die Gehäuseunterseite mit der Decke im wesentlichen fluchtet. Die verunreinigte Abluft wird mittels eines nicht gezeigten Sauggebläses über einen langgestreckten, sich nach oben verjüngenden Einlass 15 des Gehäuses angesaugt. Der Einlass 15 ist von zwei symmetrisch angeordneten Leitprofilen 4 begrenzt und wird von einem gewölbten dachförmigen Abdeckprofil 8, z.B. aus Chromnickelstahl, überdeckt, das Abstand von den freien Rändern der Leitprofile 4 hat. Das Abdeckprofil 8 begrenzt mit einem an das freie obere Ende jedes Leitprofils anschliessenden Rinnenprofil 6 eine Luftzuführung zu einer Abscheidezone.

Abscheide- und Umlenkprofile 10 sind mit dem Abdeckprofil 8 bzw. mit dem Rinnenprofil 6 verbunden, um den Luftstrom mit mäanderförmigem Richtungswechsel durchströmen zu lassen. Die Umlenkprofile 10 bestehen aus wärmeleitendem Material und sind vorzugsweise mit einer glatten Beschichtung versehen oder geschliffen bzw. poliert ausgebildet. Die peripheren Wände des Rinnenprofils 6 sind so hoch, dass im Falle von Spülwasserzugabe im unteren Bereich eine hohe Fliessgeschwindigkeit des Spülwassers in Längsrichtung vorherrscht und eine optimale Reinigung des Rinnenprofils gewährleistet wird. Auch bei einer Spülwasservorlage im Rinnenprofil 6 werden andererseits keine Flüssigkeitstropfen in den Luftstrom mitgerissen.

Der gegenseitige Abstand der Abscheide- bzw. Umlenkprofile 10 kann über die Strömungsweglänge des Rinnenprofilbodens bzw. des Abdeckprofils 8 verändert werden, um für die gewünschte Abluftdurchsatzmenge einen optimalen Abscheidegrad zu gewährleisten. Die Anordnung der Umlenkelemente 10a,b zur Bildung einer spitzwinkeligen, längsverlaufenden, nach unten offenen Kammer (7) erlaubt dadurch entstehende Luftstaus, so dass in diesem Bereich keine Fettablage stattfinden kann.

Die Abluft tritt aus der Abscheidezone des Rinnenprofils 6 in den vom Gehäuse umschlossenen Raum über einen Schlitz 12 zwischen der äusseren Profilseitenwand und dem Abdeckprofil 8 aus.

Die erfindungsgemässe Vorrichtung kann in eine ebene Decke 1 mit weiteren nicht dargestellten Zuluftaustrittselementen eingebaut sein, über welche der Einlass 15 mit einem Zuluftstrom beaufschlagbar ist. Zweckmässig sind die Zuluftaustrittselemente einstellbar ausgebildet, derart, dass einerseits eine horizontale Laminarströmung für die Ausbildung des Coandaeffekts und andererseits ein vertikaler Luftstrahl nach unten, um die aufsteigenden Wrasen nach Richtung und Stärke zu begrenzen, erzielt werden können.

Im Betrieb der Vorrichtung strömt die angesaugte Abluft in den Einlass 15 und wird vom Abdeckprofil 8 bzw. einem vor diesem angeordneten Prallblech 14 nach beiden Seiten gegen die Rinnenprofile 6 umgelenkt. Der gegenüber dem Luftstrom A geringere Geschwindigkeit aufweisende Luftstrom B wird im Bereich des unteren Randes des Abdeckprofils 8, der als Umlenk- und Abscheideprofil 10b ausgebildet ist, zum Rinnenprofilboden hin abgelenkt und trifft beschleunigt auf das nächste Umlenkprofil 10c. Die Abluft umströmt sodann ein weiteres Abscheide- und Umlenkprofil 10a auf einem im wesentlichen horizontalen, mäanderförmigen Weg. Der Luftstrom wird dabei mehrmals beschleunigt und verzögert, wodurch die im Luftstrom enthaltenen Partikeln wirksam abgeschieden werden. Für im Luftstrom noch verbleibende Wasserteilchen sind in der letzten Abscheidekammer speziell ausgebildete Flüssigkeitsabscheideschikanen 11 vorgesehen, um einen Flüssigkeitsaustrag aus dem Abscheidebereich verstärkt zu verhindern.

Die hyperbelförmige Ausbildung des Rinnenprofils 6 führt zu einer strömungstechnisch besonders guten Durchströmung und zu geringem Druckverlust bei akzeptabler Geräuschentwicklung und hohem Abscheidegrad.

Das gewölbte Abdeckprofil 8 - und vorzugsweise auch das Rinnenprofil 6 - werden kontinuierlich oder periodisch mit einer Benetzungsflüssigkeit, z.B. Wasser, beaufschlagt, wodurch die Verunreinigungen in das Rinnenprofil 6 und aus diesem in einen Ablauf 9 gelangen. Beim dargestellten Beispiel ist im Bereich des Scheitels des Abdeckprofils 8 ein sich über die Länge der Vorrichtung erstreckendes Flüssigkeitszuführrohr 13 vorgesehen, aus welchem die Spülflüssigkeit auf die Innenseite des Abdeckprofils 8 gesprüht wird, wo sie einen Flüssigkeitsfilm bildet, der zu den unteren Profilrändern strömt. Um zu verhindern, dass die Flüssigkeit in den Einlass 15 tropft, ist - wie schon erwähnt - unterhalb des Zuführrohres 13 ein Prallblech 14 angeordnet, das mit dem Abdeckprofil 8 einen Durchtrittsspalt 16 für die Spülflüssigkeit begrenzt. Zusätzlich werden die Böden der Rinnenprofile 6 periodisch mit einer Spülflüssigkeit, vorzugsweise Wasser, gespült.

Die Spülflüssigkeit fliesst, zweckmässig von einem Impulsgeber über einen elektrischen Steuerkreis gesteuert, während oder nach dem Absaugbetrieb periodisch nur kurzzeitig über die Innenseiten des Abdeckprofils 8. Dadurch werden einerseits abgeschiedene Partikeln in die Rinnenprofile 6 geschwemmt; andererseits erfolgt ein Abkühlen des Abscheiders. Dies bewirkt einen zusätzlichen Reinigungseffekt durch Kondensation der Abluft an den Abscheideflächen.

Die erfindungsgemässe Abscheidevorrichtung wird vorteilhaft über eine nur angedeutete Brandschutzeinrichtung 2 angesteuert, um im Brandfall durch eine kontinuierliche Flüssigkeitszufuhr ein Durchschlagen der Flammen in den AbluftAbsaugkanal 17 des Gehäuses 3 wirksam zu verhindern.

Es versteht sich, dass das vorstehend erläuterte Ausführungsbeispiel im Rahmen des allgemeinen Erfindungsgedankens verschiedentlich abgewandelt werden kann. So können die Abstände der Abscheideprofile 10 zueinander wie auch die Krümmungsradien entsprechend den jeweiligen Anforderungen abgeändert werden.

## Patentansprüche

1. Vorrichtung zum Abscheiden von Dunst-, Fett- und Staubpartikeln aus einem Luftstrom, mit einem an ein Sauggebläse angeschlossenen Gehäuse (3), in welches während des Betriebszustandes der Luftstrom von der Gehäuseunterseite her über einen langgestreckten Einlass (15) angesaugt wird, der von nach oben konvergierenden Leitprofilen (4) begrenzt ist, einer im wesentlichen dachförmigen Abdeckung (8) für den Einlass (15) und zu beiden Seiten des Einlasses (15) an diesen anschliessenden Rinnenprofilen (6), wobei die Abdeckung (8) die Rinnenprofile (6) zum Teil übergreift, in welch letzteren zumindest zwei im wesentlichen parallel zum Einlass (15) verlaufende Umlenk- und Abscheideelemente (10) eine im wesentlichen mäanderförmige Luftströmung zwischen dem Rinnenprofil (6) und den Umlenk- bzw. Abscheideelementen (10) erzwingen, welch letztere mit dem äusseren Teil des Rinnenprofils (6) einen Luftaustrittsspalt (12) begrenzen, wobei die Umlenk- und Abscheideelemente (10) von zueinander annähernd parallelen, spiralförmigen Segmenten gebildet sind, die einander - in vertikaler Richtung betrachtet - nicht überlappen, so dass von den einzelnen Abscheideelementen (10) abtropfende Flüssigkeiten direkt in das Rinnenprofil (6) gelangen.

2. Vorrichtung nach Anspruch 1, dadurch gekennzeichnet, dass das Rinnenprofil (6) spiralförmig gekrümmt ist und vorzugsweise zusätzliche Flüssigkeitsabscheideschikanen (11a) aufweist, welch letztere gegebenenfalls auch (11b) an den Umlenk- und Abscheideelementen (10) angeordnet sind.

3. Vorrichtung nach Anspruch 1 oder 2, dadurch gekennzeichnet, dass die Abdeckung (8) und das äusserste Ende des Rinnenprofils (6) so gekrümmt und gegenübergestellt sind, dass im Betrieb die Abluft durch den Austrittsspalt 12 unter einem spitzen Winkel von z.B. ca. 45° nach oben in Richtung einer gedachten senkrechten Mittelebene durch die Vorrichtung ausgeblasen wird, so dass ein zusätzlicher Kondensatniederschlag an der Oberseite des Abdeckprofils (8) stattfindet und allfällige Wasserdampfteilchen wieder in das Rinnenprofil (6) zurücklaufen können.

4. Vorrichtung nach einem der Ansprüche 1 bis 3, dadurch gekennzeichnet, dass mit dem gewölbten Abdeckprofil (8) wenigstens zwei Umlenk- und Abscheideelemente (10a,b) verbunden sind, welche im oberen Bereich eine spitzwinkelige, längsverlaufende, nach unten offene Kammer (7) bilden, wobei infolge dadurch entstehenden Luftstaus in diesem Bereich keine Fettablage stattfinden kann.

5. Vorrichtung nach einem der vorhergehenden Ansprüche, dadurch gekennzeichnet, dass das spiralförmige Rinnenprofil (6) und die Umlenk- und Abscheideelemente (10) so geformt sind, dass die Strömungsgeschwindigkeit der mäanderförmigen Luftströmung bis zur Austrittskante (12) gleichmässig oder stufenförmig erhöht wird, so dass die Fliehkraftabscheidung auf grosse und kleine Partikeln gleichermassen einwirkt und ein hoher Abscheidegrad erzielt wird.

6. Vorrichtung nach einem der vorhergehenden Ansprüche mit einer Spülwasservorlage im Rinnenprofil (6), dadurch gekennzeichnet, dass das Rinnenprofil (6) so hoch ausgebildet ist, dass ein Mitreissen von Wassertropfen in den Abluftstrom wirkungsvoll verhindert und die Fett- und Wasserdampfteilchen im Bereich des tiefsten Punktes (5) im Rinnenprofil (6) abgelagert bzw. gesammelt werden, in dem mittels Spülflüssigkeit eine - insbesondere periodische - Reinigung möglich ist.

7. Vorrichtung nach Anspruch 6, dadurch gekennzeichnet, dass am tiefsten Punkt (5) des mit Gefälle versehenen Rinnenprofils (6) ein Spülwasserablauf (9) vorgesehen ist und dadurch im Betriebszustand die im Spülwasser mitgeführten Fettablagerungen direkt und ohne Umlenkung durch Umlenk- oder Abscheideprofile (10) durch den Ablauf (9) ausfliessen können, wobei der Spülwasserablauf (9) so dimensioniert ist, dass er die Bildung der Spülwasservorlage erlaubt.

8. Vorrichtung nach Anspruch 5, dadurch gekennzeichnet, dass das Rinnenprofil (6) hyperbelförmig ausgeformt ist.

9. Vorrichtung nach einem der vorhergehenden Ansprüche, dadurch gekennzeichnet, dass im Bereich des Scheitels des gewölbten Abdeckprofils (8) über die Profillänge ein Zuführrohr (13) für das Zuführen von Spülflüssigkeit und unterhalb dieses Rohres (13) ein Prallblech (14), angeordnet sind, welch letzteres mit dem Abdeckprofil (8) einen in das Rinnenprofil (6) ausmündenden Durchtrittsspalt (16) für die Spülflüssigkeit begrenzt.

10. Vorrichtung nach einem der vorhergehenden Ansprüche, dadurch gekennzeichnet, dass die die Abscheideflächen bildenden Profilwände des Rinnenprofils (6) und/oder der Umlenk- und Abscheideelemente aus wärmeleitendem Material bestehen und vorzugsweise mit einer geschliffenen Oberfläche bzw. Oberflächenbeschichtung versehen sind, und dass während des Betriebes alle Abscheideflächen kontinuierlich oder periodisch mit kalter oder warmer Benetzungs- bzw. Spülflüssigkeit beaufschlagbar sind.

11. Vorrichtung nach einem der vorhergehenden Ansprüche, dadurch gekennzeichnet, dass sie in eine ebene Decke (1) mit Zuluftaustrittselementen eingebaut ist, über welche der Einlass (15) mit einem Zuluftstrom beaufschlagbar ist.

12. Vorrichtung nach einem der vorhergehenden Ansprüche, dadurch gekennzeichnet, dass im Gehäuse eine als Brandmeldeeinrichtung wirkende Temperaturfühleinrichtung (2) eingebaut ist, über welche ein elektrischer Steuerkreis der Zuführeinrichtung für die Benetzungsflüssigkeit im Sinne eines Flutens der Vorrichtung betätigbar ist.

## Claims

1. Device for separating fumes, oil droplets and dust from a stream of air, having a housing (3) which is connected to a suction fan and in which, during the operating condition, the stream of air is sucked in from the lower side of the housing via an elongated inlet (15) which is bounded by guide profiles (4) converging upwards, having essentially a roof-shaped cover (8) for the inlet (15) and channel profiles (6) on both sides of the inlet (15) and connected thereto, the cover (8) extending partly over the channel profiles (6), in which latter at least two deflection and separation elements (10) essentially parallel to the inlet (15) force an essentially meandering stream of air between the channel profile (6) and the deflection or separation elements (10), which latter with the outer part of the channel profile (6) bound an air outlet gap (12), characterized in that the deflection and separation elements (10) are formed by approximately parallel, spiral segments which - when viewed in the vertical direction - do not overlap, so that liquids dripping from the individual separation elements (10) directly enter the channel profile (6).

2. Device according to Claim 1, characterized in that the channel profile (6) is curved in the form of a spiral and preferably has additional liquid separation baffles (11a,c), which latter, optionally also (11b), are arranged on the deflection and separation elements (10).

3. Device according to Claim 1 or 2, characterized in that the cover (8) and the outmost end of the channel profile (6) are curved and are opposite one another in such a way that, during operation, the exhaust air is blown out through the outlet gap 12 upwards at an acute angle of, for example, about 45° in the direction of an imaginary perpendicular central plane through the device, so that additional condensation on the upper side of the cover profile (8) takes place and any water vapour particles can run back into the channel profile (6).

4. Device according to any of Claims 1 to 3, characterized in that at least two deflection and separation elements (10a,b) are connected to the arched cover profile (8), which elements form, in the upper region, an acute-angled chamber (7) running longitudinally and opening at the bottom, the resulting air backup preventing any oil deposition in this region.

5. Device according to any of the preceding Claims, characterized in that the spiral channel profile (6) and the deflection and separation elements (10) are shaped in such a way that the flow velocity of the meandering stream of air up to the outlet edge (12) is increased uniformly or stepwise, so that the centrifugal separation acts uniformly on large and small particles and a high degree of separation is achieved.

6. Device according to any of the preceding Claims, having a washwater receiver in the channel profile (6), characterized in that the channel profile (6) is formed to be so high that entrainment of water droplets into the stream of exhaust air is effectively prevented and the oil droplets and water vapour particles are deposited or collected in the region of the lowest point (5) in the channel profile (6), in which cleaning - in particular periodic cleaning - is possible by means of wash liquid.

7. Device according to Claim 6, characterized in that a washwater drain (9) is provided at the lowest point (5) of the channel profile (6) provided with a gradient and consequently, in the operating conditions, the oil deposits entrained in the washwater can flow out through the drain (9) directly and without deflection by deflection or separation profiles (10), the washwater drain (9) being dimensioned so that it permits the formation of the washwater receiver.

8. Device according to Claim 5, characterized in that the channel profile (6) has a hyperbolic shape.

9. Device according to any of the preceding Claims, characterized in that a supply pipe (13) for supplying wash liquid is arranged in the region of the summit of the arched cover profile (8), over the profile length, and an impact plate (14) is arranged below this pipe (13), which impact plate, with the cover profile (8), bounds a passage (16) which opens into the channel profile (6) and is intended for the wash liquid.

10. Device according to any of the preceding Claims, characterized in that the profile walls of the channel profile (6) which form the deposition surfaces and/or the deflection and separation elements consist of heat-conducting material and are preferably provided with a ground surface or surface coating, and that, during operation, all deposition surfaces can be brought into contact continuously or periodically with cold or warm wetting liquid or wash liquid.

11. Device according to any of the preceding Claims, characterized in that it is installed in a flat ceiling (1) with air supply outlet elements, via which the inlet (15) can be fed with an air supply.

12. Device according to any of the preceding Claims, characterized in that a temperature sensor means (2) acting as a fire alarm means is installed in the housing, via which temperature sensor means an electrical control circuit of the supply means for the wetting liquid can be actuated to flood the device.

## Revendications

1. Dispositif de séparation de particules, de fumées, de graisses et de poussières à partir d'un flux d'air, avec un carter (3), raccordé à une soufflante d'aspiration, dans lequel, pendant l'état de fonctionnement, le flux d'air est aspiré depuis la face inférieure du carter par une admission (15) à forme allongée, qui est délimitée par des profilés de guidage (4), allant en convergeant en direction du haut, avec un recouvrement (8) sensiblement en forme de toit pour l'admission (15), et des profilés formant gouttière (6) se raccordant à ceux-ci des deux côtés de l'admission (15), le recouvrement (8) entourant par le dessus en partie les profilés formant gouttière (6), dans lequels sont disposés au moins deux éléments déviateurs et séparateurs (10) s'étendant sensiblement parallèlement à l'admission (15), contraignant l'écoulement d'air à se faire sensiblement en méandres entre le profilé formant gouttière (6) et les éléments déviateurs et/ou séparateurs (10), ces derniers délimitant, avec la partie extérieure du profilé formant gouttière (6), un intervalle de sortie d'air (12), les éléments déviateurs et séparateurs (10) étant constitués par des segments en forme de spirale à peu près parallèles les uns aux autres, qui ne se chevauchent pas entre eux - lorsque l'on observe dans la direction verticale -, si bien que des liquides, s'égouttant des différents éléments séparateurs (10), arrivent directement à l'intérieur du profilé formant gouttière (6).

2. Dispositif selon la revendication 1, caractérisé en ce que le profilé formant gouttière (6) est incurvé en forme de spirale et présente, de préférence, des chicanes de séparation de liquides (11a,b) supplémentaires, ces dernières (11b), le cas échéant, étant disposées également sur les éléments déviateurs et séparateurs (10).

3. Dispositif selon la revendication 1 ou 2, caractérisé en ce que le recouvrement (8) et l'extrémité la plus extérieure du profilé formant gouttière (6) sont d'une incurvation et d'une position en regard telles que, en fonctionnement, l'air d'évacuation est expulsé à travers l'intervalle de sortie (12) sous un angle aigu, de par exemple 45°, vers le haut dans la direction d'un plan médian vertical imaginaire passant à travers le dispositif, si bien que s'effectue un dépôt de condensation supplémentaire sur la face supérieure du profilé de recouvrement (8) et que les éventuelles particules de vapeur d'eau peuvent retourner a l'intérieur du profilé formant gouttière (6).

4. Dispositif selon l'une des revendications 1 à 3, caractérisé en ce qu'au profilé de recouvrement incurvé (8) sont reliés au moins deux éléments déviateurs et séparateurs (10a,b) qui constituent dans la zone supérieure une chambre (7) à angles aigus s'étendant longitudinalement, ouverte vers le bas, aucune déposition de graisse ne pouvant se produire dans cette zone, suite au mélange d'air se produisant de ce fait.

5. Dispositif selon l'une des revendications précédentes, caractérisé en ce que le profilé formant gouttière (6) en forme de spirale et les éléments déviateurs et séparateurs (10) sont formés de manière que la vitesse d'écoulement du flux d'air en forme de méandres soit augmentée de façon régulière ou par degrés, jusqu'à l'arête de sortie (12), si bien que la séparation, faite par l'utilisation de la force centrifuge, agit de manière identique sur les grosses et les petites particules, et que l'on obtient un haut degré de séparation.

6. Dispositif selon l'une des revendications précédentes, avec un collecteur à eau de rinçage dans le profilé formant gouttière (6), caractérisé en ce que le profilé formant gouttière (6) est réalisé d'une hauteur telle que tout arrachement des gouttes d'eau dans le flux d'air d'évacuation est efficacement empêché et que les particules de graisses et de vapeur d'eau se déposent, respectivement se collectent, dans la zone du point (5) le plus bas dans le profilé formant gouttière (6), un nettoyage - en particulier périodique - étant rendu possible au moyen du liquide de rinçage.

7. Dispositif selon la revendication 6, caractérisé en ce qu'au point (5) le plus bas du profilé formant gouttière (6) doté d'une pente est prévue une évacuation d'eau de rinçage (9) et que, de ce fait, à l'état de fonctionnement, les dépôts de graisses entraînés conjointement dans l'eau de rinçage peuvent s'évacuer directement et sans changement de direction par des profilés déviateurs ou séparateurs (10), en passant par l'évacuation (9), l'évacuation d'eau de rinçage (10) étant dimensionnée, de manière à permettre la constitution du collecteur d'eau de rinçage.

8. Dispositif selon la revendication 5, caractérisé en ce que le profilé formant gouttière (6) est configuré en forme d'hyperbole.

9. Dispositif selon l'une des revendications précédentes, caractérisé en ce que, dans la zone du sommet du profil de recouvrement (8) incurvé, sur la longueur de profil sont disposés un tube d'amenée (13) destiné à amener du liquide de rinçage et, au-dessous de ce tube (13), une tôle d'impact (14), cette dernière délimitant avec le profil de recouvrement (8) un intervalle de passage (16), débouchant dans le profilé formant gouttière (6), pour le liquide de rinçage.

10. Dispositif selon l'une des revendications précédentes, caractérisé en ce que les parois de profilés, constituant les surfaces de séparation, du profilé formant gouttière (6) et/ou des éléments déviateurs et séparateurs sont constituées d'un matériau conducteur de la chaleur et sont de préférence dotés d'une surface, respectivement d'un revêtement de surface, meulé ou rectifié, et que, pendant le fonctionnement, toutes les surfaces de séparation sont exposées de façon continue ou périodique à un liquide de mouillage ou de rinçage, froid ou chaud.

11. Dispositif selon l'une des revendications précédentes, caractérisé en ce qu'il est monté intégré dans un plafond (1) plan équipé d'éléments de sortie d'air d'amenée, par lequel l'admission (15) peut être soumise à un flux d'air d'amenée.

12. Dispositif selon l'une des revendications précédentes, caractérisé en ce que dans le carter est intégré un dispositif de détection de température (2), agissant comme dispositif d'indication d'incendie, par lequel un circuit de commande électrique appartenant au dispositif d'amenée en liquide de mouillage peut être actionné dans le sens d'un noyage du dispositif.
